# EUROPEAN PATENT SPECIFICATION

(11) **EP 2 532 509 B1**
(45) Date of publication and mention of the grant of the patent: **16.02.2022**
(21) Application number: 12171048.7
(22) Date of filing: 06.06.2012
(51) Int. Cl.: B29C 43/22, B29C 48/00, B29C 48/92, G02B 5/18, B29C 59/02, B29C 59/04, B29C 48/07, B42D 25/328, B42D 25/355

(54) **Optically variable device (ovd) images embedded within plastic strips**
In Kunststoffstreifen eingebettete Bilder mit optisch variablem Merkmal (OVD)
Images de dispositif optiquement variable (OVD) incorporées dans des bandes de plastique

(30) Priority: 09.06.2011 US 201113156387
(43) Date of publication of application: 12.12.2012
(73) Proprietor: CET Films Corp., Lakewood, NJ 08701 (US)
(72) Inventor: Masi, George V., Toms River, NJ New Jersey 08755 (US); Mancilla, Mark, Doylestown, PA Pennsylvania 18902 (US)
(74) Representative: Schmitt-Nilson Schraud Waibel Wohlfrom Patentanwälte Partnerschaft mbB

(56) References cited:
- US-A- 5 200 253
- US-A- 5 743 981
- US-A- 5 838 466
- US-A- 5 945 042
- US-A1- 2003 203 230
- US-A1- 2009 251 749

## Description

This invention relates to a method to manufacture an optically transparent plastic strip, that could be film or sheet, used to secure information contained on a credit card or identification card. More particularly, an optically variable device, such as a diffractive pattern or hologram, is embossed into a thermoplastic during an extrusion process.

The use of plastic strips with overt and covert security features has become prevalent in the manufacture of secure cards used in applications such as financial transactions and identification cards. Plastic strips with laser engravable additives have added to the functionality and the ability to secure such cards. To further enhance the security of the card, diffractive structures, such as holograms, are added to a secondary film, and then the secondary film is laminated to a plastic overlay. Alternatively, the secondary film is bonded to the plastic overlay by hot stamping. In yet another alternative, secondary diffractive coatings are cast onto a polycarbonate film. To protect the integrity of the diffractive structure, the secondary film is usually covered with a topcoat.

The use of a secondary film increases cost and complexity. The bond between a secondary film and the plastic overlay film creates a possible security risk by forming a potentially separable layer to the overall structure. The necessity of a protective topcoating adds further complexity to the overall construction.

United States Patent No. 5,331,443 discloses a composite film having a hologram embossed into one film layer and coated with a reflective metalized layer. A laser selectively etches unique indicia into the metalized layer. The composite film is bonded to a substrate that may be transparent or opaque.

United States Patent No. 5,815,292 discloses a first transparent film layer that is embossed with a first surface relief diffracting pattern and partially coated with a first metallization layer. The first transparent film layer is bonded to a second transparent film layer having a second surface relief diffracting pattern and coated with a second metallization layer. The film assembly is then bonded to a substrate to be authenticated with an adhesive. The adhesive is stronger than any of the film assembly bonds such that the assembly will be damaged if an attempt is made to remove it from the substrate.

In US 5 743 981 A optical security articles and methods of making same are described comprising a first layer substantially transparent to visible light and having a first refractive index, the first layer having a relief pattern on a first surface thereof and a substantially smooth second surface, and an adhesive layer coterminating with the first layer. The adhesive layer substantially completely fills and makes contact with a first portion of the plurality of geometric concavities, the adhesive layer having a second refractive index which is substantially similar to the first refractive index of the first layer. A second portion of the plurality of geometric concavities are precluded from contact with the adhesive layer by a corresponding plurality of separation layers, each separation layer having a separation layer refractive index which is different from the refractive index of the first layer.

US 5 945 042 A provides a method for continuously forming an array of optical elements which includes feeding synthetic resin sheeting having a temperature in the flow temperature region of the synthetic resin directly to a thermoforming zone of embossing means; continuously pressing the sheeting against a mold provided on the embossing means and having a pattern for defining an array of optical elements while maintaining the sheeting at that flow temperature, to bring the sheeting into intimate contact with the mold and thereby form an array of optical elements on one surface of the sheeting; laminating a surfacing film to the side of the sheeting opposite to the mold as required; feeding a carrier film to the side of the resulting laminate opposite to the mold and bringing the carrier film into close contact therewith; and cooling the sheeting to a temperature lower than the glass transition temperature of the synthetic resin, as well as apparatus therefore.

According to US 5 200 253 (A) thin film of molten polypropylene resin extruded from a T die is pressed and cooled with a chill roll equipped with a hologram relief master plate on its peripheral surface, whereupon a hologram pattern is simultaneously formed as an integral part of the polypropylene resin sheet being molded. Since the polypropylene resin has a Rockwell hardness of at least 70, the hologram pattern formed in the resulting hologram forming sheet is less likely to be damaged or lost during subsequent processing.

According to US 5 838 466 A replicas of a surface relief hologram, or other light diffraction pattern, are coated with a transparent material having substantially the same refractive index as the holograms to conform to the surface relief patterns and thus hide the hologram. The coating is pealed by hand off of the surface relief pattern in order to reveal an image visible in light reflected from the hologram. Such hidden holograms can be attached to a greeting card to reveal a greeting when the coating is removed, attached to pages of magazines or books to carry an advertising message, and the like. Other uses include making lottery tickets or other indications of a prize from such holograms, since the indication of any prize won by the holder remains hidden until the coating is pulled off, even though the coating is optically transparent.

US 2003/203230 A1 describes an embossable, multilayer, polyolefin film comprising a core layer comprising a polyolefin and an appearance enhancing agent selected from the group consisting of coloring agents, phosphorescence producing agents, reflective agents, and mixtures thereof, wherein the core layer comprises the interior of the film; and an embossable layer exterior to and on one side of the core layer, the embossable layer comprising an olefin polymer, and being particularly suitable for embossing and subsequently receiving a metal layer thereon.

United States Published Patent Application, Publication No. US 2009/0251749 A1, discloses a hologram containing overlay for fusing to a substrate. The overlay has a polycarbonate base, a diffractive pattern is formed on the base and coated with a reflection enhancing layer. The diffractive layer is preferably applied by a casting process, although embossing may be utilized. Embossed holograms are disclosed to be less desirable than cast holograms because the conventional embossed hologram base is a thermo compliant material; thus the image is formed by applying pressure only. As a result, it is subject to distortion in a vigorous lamination or embedding process required for polycarbonate card manufacturing.

There remains a need for a method to emboss a diffractive structure directly into a plastic strip, without a need to subsequently apply a protective topcoating, that provides not only advantages in reduced complexity and cost, but also enhances the overall security of the structure as the diffractive image is within the film, and can only be removed or altered by destroying the plastic strip.

In a first embodiment, a method according to claim 1 for the manufacture of a plastic strip useful to secure information contained on a face of a secure card or document is disclosed. The method includes extruding a polymer resin to form an optically transparent sheet and then embossing an optically variable device into a first surface of this optically transparent sheet.

In a second embodiment, a plastic strip useful to secure information contained on a face of a secure card or document according to claim 9 is disclosed. This strip has an optically transparent substrate with a nominal thickness and an optically variable device embossed into a first surface of that optically transparent substrate.

In particular embodiments of the above method said polymer resin may be selected to contain polycarbonate. Further, said optically transparent strip may exit an extruder at a temperature of between 120°C and 320°C. In particular said optically transparent sheet may be embossed at a temperature of between 145°C and 210°C. Further, a time from exiting said extruder until said embossing step may be effective to prevent said optically transparent strip from cooling to a temperature below 120°C. In particular, said time may be less than 3 seconds. In the method of the invention said embossing step includes passing said optically transparent strip through a pair of rolls having a nip defining an embossed optically transparent strip thickness, said pair of rolls working in conjunction with a textured image (50) having a mirror image of said optically variable device. In particular, said embossed optically transparent strip thickness may be from 50% to 100% of the thickness of said optically transparent strip thickness prior to said embossing step.

In the method of the invention at least a portion of said optically variable device is metallized.

In the method of the invention security features are laser engraved into said optically transparent strip following embossing.

In further embodiments of the method said optically transparent strip is bonded following embossing to said face of said card.

In particular embodiments of the above strip, said optically transparent substrate may include essentially a thermoplastic resin. In further embodiments, a metallization layer may be disposed on peaks of said optically variable device. In further embodiments, security features may be formed into said first surface.

The details of one or more embodiments are set forth in the accompanying drawings and the description below. Other features, objects and advantages of the invention will be apparent from the description and drawings, and from the claims.
FIG. 1 is a cross-sectional representation of a plastic strip having a diffractive structure bonded to one surface thereof, as known from the prior art.
FIG. 2 is a cross sectional representation of a plastic strip with a diffractive structure embossed into a surface thereof, in accordance with an embodiment of the present disclosure.
FIG. 3 is a bottom view of the plastic strip of FIG. 2.
FIG. 4 illustrates a method to manufacture the plastic strip of FIGs. 2 and 3.

Like reference numbers and designations in the various drawings indicated like elements.

The following definitions apply throughout this patent application. A "film" has a nominal thickness of between 0.025 mm and 0.79 mm (0.001 inch and 1/32 inch). A "sheet" has a nominal thickness in excess of 0.79 mm (1/32 inch). A "strip" encompasses both film and sheet. "Optically transparent" means that text, numbers, figures and the like on one side of the strip may be accurately scanned by an electronic device or accurately perceived by a person from the opposing side of the strip even though the light transmission through the strip may be less than 100%.

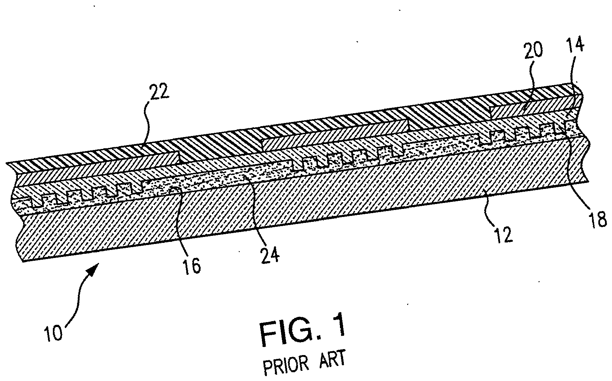

FIG. 1 shows in cross-sectional representation, a plastic strip 10 as known from the prior art. The plastic strip 10 may be used to authenticate information contained on a secured device, such as a credit card, driver's license or passport. The authenticity of the information, such as a picture or a social security number is secured by anti-counterfeiting characteristics of the plastic strip 10.

The plastic strip 10 includes an optically transparent plastic film layer 12 and a security layer 14 bonded together at a first surface 16 of the optically transparent plastic film layer 12. The security layer 14 is a plastic film layer that has an optically variable device (OVD) 18, such as a diffractive structure, for example, a hologram, formed thereon such as by casting or embossing. The security layer 14 further has a metalized layer 20, such as a layer of aluminum. Portions of the metalized layer may be removed, such as by chemical etching or laser ablation, to leave a reflective pattern that contributes to the uniqueness of the plastic strip 10. A protective coating layer 22 prevents damage to the OVD 18 and to the reflective pattern.

The security layer 14 is bonded to the first surface 16 of the optically transparent film layer 12, such as by an adhesive 24. However, the integrity of the information may be compromised if the security layer can be peeled away. It is also known to cast the optically variable device 18 directly on the first surface 16, however, that process has been found to be slow and to add complexity to the overall construction of the plastic strip.

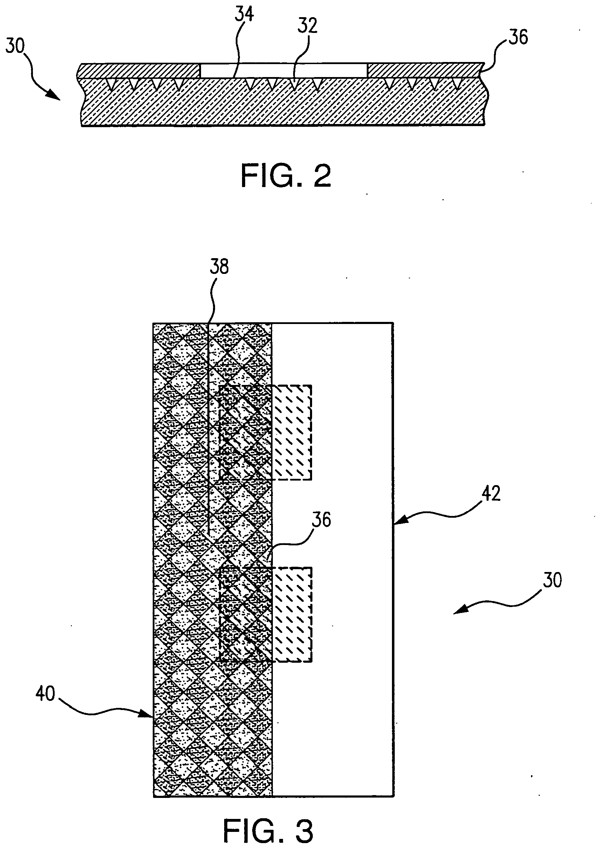

FIG. 2 is a cross sectional representation of a plastic substrate 30 in accordance with an embodiment of the present disclosure. The plastic substrate 30 is formed from a mechanically deformable, optically transparent polymer, such as polycarbonate or other thermoplastic resin. This polymer is compounded, as described below, to include an additive to facilitate laser engraving, such as carbon black. An optically variable device 32, such as a diffractive structure, for example, a hologram, is embossed directly into a first surface 34 of the plastic substrate 30.

A metalized layer 36 is formed over all, or over selected portions, of the first surface 34 resulting in a reflective pattern. Figure 3 illustrates the plastic substrate 30 in a bottom view showing a pattern 38 corresponding to the peaks and valleys of the embossed structure in a first portion 40 and the absence of the peaks and valleys in a non-embossed second portion 42. The patterned metallization layer 36 may overlie all of selected regions of one or both of the first portion 40 and the second portion 42. Additional security features may be etched directly into either side of the plastic strip 30 by laser ablation. Such additional security features may include an issuer's name and/or logo, unique words, numbers, pictures or the like.

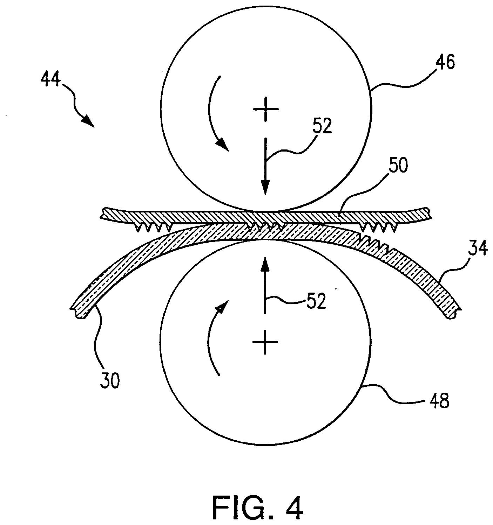

A method for the manufacture of the plastic substrate 30 illustrated in Figures 2 and 3 includes the steps of compounding resin constituents having, by weight, 50% - 99 % of polycarbonate as the polymer, 1% - 40 % of carbon black or other additive to enhance laser engraving, and optionally 1% - 30 % of pigment as colorant to form an extrudable resin. The resin is extruded into an optically transparent strip using pressure and heat. Typically, the strip will exit the extruder at a temperature of between 120[deg.]C and 320[deg.]C and preferably between 145[deg.]C and 320[deg.]C. With reference to Figure 4, the extruded strip is directed to a pair of rolls 44 for embossing while at a temperature above 120[deg.]C and preferably between 145[deg.]C and 210[deg.]C. Typically, the time from exiting the extruder to entering the embossing rolls is under three seconds. Rolls 46 and 48 are used in conjunction with a textured image 50 to create the optically variable device 32. The spacing between first roll 46 and second roll 48 is effective to reduce the thickness of the plastic substrate by up to 50% producing a compressive force 52 applied at the roll nip forcing the mirror image of the textured image 50 pattern into first surface 34 of the plastic substrate. On exiting the pair of rolls 44, the thermoplastic strip containing the embossed optically variable device is cooled and available for further processing, such as metallization and laser engraving.

Alternatively, the plastic substrate 30 is not formed from an optically transparent material and is translucent or opaque. In which case, the security features are viewed through the card or other structure bonded to the substrate.

One or more embodiments of the present invention have been described.

## Claims

1. A method for the manufacture of a polymer strip (30) useful to secure information contained within a secure card or document, **characterized by**:
providing a first roll (46) and a second roll (48) spaced apart from one another by a spacing distance;
providing a textured image (50) having an outward extending mirror image of an optically variable device (32);
extruding a polymer resin, having an additive effective to facilitate laser engraving, to form an optically transparent strip;
rotating said first roll (46) in a first direction and said second roll (48) in a second and opposite direction so as to feed said optically transparent strip and said textured image (50) between said spacing distance so as to compress said textured image (50) into said optically transparent strip, thereby embossing said optically variable device (32) into a first surface (34) of said optically transparent strip;
laser engraving at least one security feature into said optically transparent strip; and
metalizing at least a portion of said optically variable device (32).

2. The method of claim 1 **characterized in that** said polymer resin is selected to contain polycarbonate.

3. The method of claim 2 **characterized in that** said optically transparent strip exits an extruder at a temperature of between 120°C and 320°C.

4. The method of claim 3 **characterized in that** said optically transparent sheet is embossed at a temperature of between 145°C and 210°C.

5. The method of claim 3 **characterized in that** a time from exiting said extruder until said embossing step is effective to prevent said optically transparent strip from cooling to a temperature below 120°C.

6. The method of claim 5 **characterized in that** said time is less than 3 seconds.

7. The method of claim 1 **characterized in that** said embossed optically transparent strip thickness is from 50% to 100% of the thickness of said optically transparent strip thickness prior to said embossing step.

8. The method of either claim 1 **characterized in that** said optically transparent strip is bonded following embossing to said first surface of said card.

9. A polymer strip (30) useful to secure information contained on a face of a secure card or document, the polymer strip (30) comprising
an optically transparent substrate (30) having a nominal thickness;
**characterized in that** the polymer strip (30) further comprises security features formed into a first surface (34) of the polymer strip (30) using a method according to any of claims 1 to 8.

10. The strip of claim 9 **characterized in that** said optically transparent substrate (30) includes essentially of a thermoplastic resin.

11. The strip of claim 10 **characterized in that** a metallization layer (36) is disposed on peaks of said optically variable device (32).

## Patentansprüche

1. Verfahren zum Herstellen eines Polymerstreifens (30), der von Nutzen ist, um Information zu sichern, die in einer sicheren Karte oder einem sicheren Dokument enthalten ist,
**gekennzeichnet durch**:
Bereitstellen einer ersten Rolle (46) und einer zweiten Rolle (48), die über eine Beabstandungsdistanz voneinander beabstandet sind;
Bereitstellen eines texturierten Bilds (50), das ein sich nach außen erstreckendes Spiegelbild einer optisch variablen Vorrichtung (32) aufweist;
Extrudieren eines Polymerharzes, das einen Zusatz aufweist, der ein ver - einfachtes Lasergravieren bewirkt, um einen optisch transparenten Streifen zu bilden;
Drehen der ersten Rolle (46) in einer ersten Richtung und der zweiten Rolle (48) in einer zweiten und entgegengesetzten Richtung, um den optisch transparenten Streifen und das texturierte Bild (50) zwischen die Beabstan - dungsdistanz zu befördern, um das texturierte Bild (50) in den optisch trans - parenten Streifen zu drücken und dadurch die optisch variable Vorrichtung (32) in eine erste Oberfläche (34) des optisch transparenten Streifens zu prägen;
Lasergravieren von mindestens einem Sicherheitsmerkmal in den optisch transparenten Streifen; und
Metallisieren von mindestens einem Teil der optisch variablen Vorrichtung (32).

2. Verfahren nach Anspruch 1,
**dadurch gekennzeichnet, dass** das Polymerharz derart ausgewählt wird, dass es Polycarbonat enthält.

3. Verfahren nach Anspruch 2,
**dadurch gekennzeichnet, dass** der optisch transparente Streifen einen Ex - truder bei einer Temperatur zwischen 120°C und 320°C verlässt.

4. Verfahren nach Anspruch 3,
**dadurch gekennzeichnet, dass** der optisch transparente Streifen bei einer Temperatur zwischen 145°C und 210°C geprägt wird.

5. Verfahren nach Anspruch 3,
**dadurch gekennzeichnet, dass** eine Zeit vom Verlassen des Extruders bis zu dem Prägeschritt wirksam verhindert, dass der optisch transparente Streifen auf eine Temperatur unter 120°C abkühlt.

6. Verfahren nach Anspruch 5,
**dadurch gekennzeichnet, dass** die Zeit weniger als 3 Sekunden beträgt.

7. Verfahren nach Anspruch 1,
**dadurch gekennzeichnet, dass** die Dicke des geprägten optisch transparen - ten Streifens 50 % bis 100 % der Dicke des optisch transparenten Streifens vor dem Prägeschritt beträgt.

8. Verfahren nach Anspruch 1,
**dadurch gekennzeichnet, dass** der optisch transparente Streifen nach dem Prägen mit der ersten Oberfläche der Karte verbunden wird.

9. Polymerstreifen (30), der von Nutzen ist, um Information zu sichern, die auf einer Vorderseite einer sicheren Karte oder eines sicheren Dokuments ent - halten ist, wobei der Polymerstreifen (30) aufweist:
ein optisch transparentes Substrat (30) mit einer Nenndicke;
**dadurch gekennzeichnet, dass** der Polymerstreifen (30) ferner Sicherheits - merkmale aufweist, die unter Verwendung eines Verfahrens nach einem der Ansprüche 1 bis 8 in einer ersten Oberfläche (34) des Polymerstreifens (30) gebildet sind.

10. Streifen nach Anspruch 9,
**dadurch gekennzeichnet, dass** das optisch transparente Substrat (30) im Wesentlichen ein thermoplastisches Harz aufweist.

11. Streifen nach Anspruch 10,
**dadurch gekennzeichnet, dass** eine Metallisierungsschicht (36) auf Erhe - bungen der optisch variablen Vorrichtung (32) angeordnet ist.

## Revendications

1. Procédé destiné à la fabrication d'une bande polymère (30) utile pour protéger des informations qui sont contenues au sein d'une carte ou d'un document sécurisé, **caractérisé par** le fait de
prévoir un premier rouleau (46) et un second rouleau (48) espacés l'un de l'autre d'une distance d'écartement ;
prévoir une image texturée (50) qui présente une image spéculaire d'un dispositif (32) qui manifeste une variabilité du point de vue optique, s'étendant vers l'extérieur ;
extruder une résine polymère qui présente un additif efficace pour faciliter une gravure au laser dans le but d'obtenir une bande transparente du point de vue optique ;
faire tourner ledit premier rouleau (46) dans une première direction et ledit second rouleau (48) dans une deuxième direction opposée à la première de façon à alimenter ladite bande transparente du point de vue optique et ladite image texturée (50) dans ladite distance d'écartement de façon à comprimer ladite image texturée (50) dans ladite bande transparente du point de vue optique, pour ainsi faire pénétrer ledit dispositif (32) qui manifeste une variabilité du point de vue optique dans une première surface (34) de ladite bande transparente du point de vue optique ;
graver à l'aide d'un laser au moins une caractéristique de sécurité dans ladite bande transparente du point de vue optique ; et
métalliser au moins une portion dudit dispositif (32) qui manifeste une variabilité du point de vue optique.

2. Procédé selon la revendication 1, **caractérisé en ce que** ladite résine polymère est choisie pour contenir du polycarbonate.

3. Procédé selon la revendication 2, **caractérisé en ce que** ladite bande transparente du point de vue optique quitte une extrudeuse à une température qui se situe entre 120 °C et 320°C.

4. Procédé selon la revendication 3, **caractérisé en ce que** ladite feuille transparente du point de vue optique est soumise à un emboutissage à une température qui se situe entre 145 °C et 210°C.

5. Procédé selon la revendication 3, **caractérisé en ce qu'**un laps de temps qui s'étend depuis la sortie de ladite extrudeuse jusqu'à ladite étape d'emboutissage est efficace pour empêcher ladite bande transparente du point de vue optique de se refroidir jusqu'à une température qui est inférieure à 120 °C.

6. Procédé selon la revendication 5, **caractérisé en ce que** ledit laps de temps est inférieur à 3 secondes.

7. Procédé selon la revendication 1, **caractérisé en ce que** l'épaisseur de ladite bande transparente du point de vue optique qui a été soumise à un emboutissage représente de 50 % à 100 % de l'épaisseur de ladite bande transparente du point de vue optique avant ladite étape d'emboutissage.

8. Procédé selon la revendication 1, **caractérisé en ce que** ladite bande transparente du point de vue optique est collée à la suite de l'emboutissage à ladite première surface de ladite carte.

9. Bande polymère (30) qui est utile pour protéger des informations qui sont contenues sur une face d'une carte ou d'un document sécurisé, la bande polymère (30) comprenant :
un substrat (30) transparent du point de vue optique qui présente une épaisseur nominale ;
**caractérisée en ce que** la bande polymère (30) comprend en outre des caractéristiques de sécurité qui sont formées dans une première surface (34) de la bande polymère (30) en utilisant un procédé en conformité avec l'une quelconque des revendications 1 à 8.

10. Bande selon la revendication 9, **caractérisée en ce que** ledit substrat (30) transparent du point de vue optique englobe essentiellement une résine thermoplastique.

11. Bande selon la revendication 10, **caractérisée en ce qu'**une couche de métallisation est disposée sur des pointes dudit dispositif (test 32) qui manifeste une variabilité du point de vue optique.
